# EUROPEAN PATENT SPECIFICATION

(11) **EP 2 105 014 B1**
(45) Date of publication and mention of the grant of the patent: **06.08.2014**
(21) Application number: 07852064.0
(22) Date of filing: 28.11.2007
(51) Int. Cl.: H04L 29/06, G10L 19/00

(54) **RECEIVER ACTIONS AND IMPLEMENTATIONS FOR EFFICIENT MEDIA HANDLING**
EMPFÄNGERAKTIONEN UND IMPLEMENTIERUNGEN FÜR EFFIZIENTEN UMGANG MIT MEDIEN
ACTIONS ET MISES EN OEUVRE DE RÉCEPTEUR POUR UN TRAITEMENT MULTIMÉDIA EFFICACE

(30) Priority: 08.12.2006 US 869160 P
(43) Date of publication of application: 30.09.2009
(73) Proprietor: Telefonaktiebolaget LM Ericsson (publ), 164 83 Stockholm (SE)
(72) Inventor: JOHANSSON, Ingemar, 976 32 Luleå (SE); ENSTRÖM, Daniel, 954 33 Gammelstad (SE); FRANKKILA, Tomas, 972 31 Luleå (SE)
(74) Representative: Hedman, Anders
(86) International application number: PCT/SE2007/001050
(87) International publication number: WO 2008/069722

(56) References cited:
- EP-A2- 1 455 343
- US-A1- 2003 212 550
- US-A1- 2004 071 442
- US-A1- 2005 227 657
- SCHULZRINNE H. ET AL.: 'RFC 3550, RTP: A Transport Protocol for Real-Time Applications' NETWORK WORKING GROUP REQUEST FOR COMMENTS: 1889, [Online] January 1996, pages 1 - 61, XP003022794 Retrieved from the Internet: <URL:http://www.ietf.org/rfc/rfc1889.txt>

## Description

### TECHNICAL FIELD

The present invention generally relates to media technology in communication environments, and more particularly to actions and/or implementations on the receiver side for efficient media handling.

### BACKGROUND

Modem communication systems support exchange of a wide variety of media between users, including voice, audio, video, text and images. Most so-called multimedia systems are based on the Internet Protocol (IP) technology. A particular example of such an IP-based system is the IP Multimedia Subsystem (IMS) [1], which allows advanced multimedia services and content to be delivered over broadband networks. For example, real-time user-to-user multimedia telephony (MMTel) services [2] will play a key role to satisfy the needs of different multimedia services.

By way of example, supplementary services will play an important role in modem communication systems such as IMS Multimedia Telephony (MMTel) systems, and it is important that such systems support the same or at least similar supplementary services that are found in traditional systems without causing performance degradations such as media distortions. Examples of supplementary services are calling line identification presentation, call on hold, conferencing and announcements. For example, announcements may be generated by the communication network or by the remote user's switchboard or computer.

Usage examples of announcements from the communication network include:
- Error messages when the command that the user has initiated cannot be completed. For example: when the caller has suppressed presentation of the phone number and the answerer has defined that he will not answer calls without seeing the phone number, then the system must present an error message to the caller.
- When user A puts the session on hold the system may play a message about this to user B.
- In a conference call, the conference server may present an announcement when a new user enters or when a user leaves the session, for example: "John Smith has entered the meeting" and "John Smith has left the meeting".
- A user has a pre-paid subscription that is running empty. The operator can restrict the usage due to a low amount and wants to announce that at session start or during the session (it might be a very long session).
- A method that is used more and more on the Internet is to present an image with a pin code (or password) on a web page. The image of the pin code is distorted so much that automatic text recognition systems should not be able to detect the pin code while it should still be possible for a clever human to read the letters and numbers. This is used instead of sending the corresponding pin code with an (insecure) e-mail.

Usage examples of announcements from the answerer are:
- A user calls a travel agency to book a ticket. The following scenario is likely:
   1. The user talks with a travel agent to find the best traveling option. In this step, the discussion is between two humans.
   2. After deciding on the travel, the user is requested to key in his credit card number. This is a man-machine communication where the user hears pre-recorded or machine-generated messages and presses the telephone buttons (0-9) to insert his numbers. In this process the following sentence probable: "Key in your credit card number", "You have entered: 1234 5678 9012 3456. If this is correct then press 1, if not then press 2.", "Insert the expiration date of your credit card", "You have entered: January 1, 2007". These sentences will be generated by the announcement server.
   3. After keying in the credit card number and other required data, the session continues with the travel agent in order to decide on further travel options.
   4. These steps may be repeated multiple times.

Compared to traditional communication systems, the conditions and requirements for handling media will change dramatically in modern multimedia communication systems, and there is thus a general need to provide solutions for efficiently handling media in such communication systems.

US 2003/0212550 relates to improvements of speech quality of Voice-over-Pocket, VoP, systems. An encoder is provided to encode input speech signals, and the speech signals contain frames of talk spurts and silence gaps. There is also provided a voice activity detector to detect whether a current frame is the first active frame of a talk spurt. In response to detection of a first active frame of a talk spurt, the encoder and/or decoder may be reset.

EP 1 455 343 relates to a system and method of testing all media encoders and decoders in a digital communication system.

### SUMMARY

The present invention overcomes these and other drawbacks of the prior art arrangements.

It is a general object of the present invention to improve the handling of media in a (multimedia) communication system.

In particular it is desirable to support supplementary services while eliminating or reducing media distortions on the receiver side in a highly cost-efficient manner.

It is a specific object to provide an improved method and system for reducing media distortions in a receiver equipped with a decoder for decoding incoming media streams.

It is another specific object to provide an improved receiver for use in a (multimedia) communication system.

These and other objects are met by the invention as defined by the accompanying patent claims.

It has been recognized by the inventors that the use of different encoder instances during a communication session may lead to a state mismatch in the decoder on the receiver side, resulting in distortions that may be annoying to the end-user. As an example, this may happen when media from a new media source is inserted in the communication session, e.g. when switching from one media source to another, or when media from a new source is added to an existing media stream.

A basic idea of the invention is therefore to detect a change in source of incoming media during an on-going communication session, and reset decoder states of the decoder in response to such a detected change before decoding new incoming media. In this way, the state mismatch can be avoided without the need for several active decoder instances in the receiver, leading to substantial savings with respect to overall complexity, memory usage and power consumption. This also means that media distortions can be eliminated or at least reduced when the decoded media is finally rendered.

Preferably, the detection mechanism is configured for detecting that media from a new media source is inserted in the communication session, e.g. when switching from one media source to another, or when media from a new source is added to the existing media stream. In general, however, a change in source can be a switch between sources, addition of a source and/or removal of a source.

In other words, the receiver is configured for detecting a potential state mismatch in the decoder during an on-going communication session, and for resetting the decoder in response to a detected potential state mismatch to thereby avoid the state mismatch.

In an intimately related aspect of the invention, the sending side enforces a decoder reset on the receiving side in preparation of media from a new source by sending a predefined signal pattern. On the receiving side this means that during an on-going communication session involving reception of media from a first media source the receiver will receive a predefined signal pattern in preparation of subsequent reception of media from a second different media source. The decoder will then be reset in response to the predefined signal pattern before initiating decoding of media from the second media source.

The invention is particularly applicable in modem communication systems for supplementary services such as announcements, call-on-hold and conference services.

Other advantages offered by the invention will be appreciated when reading the below description of embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a schematic diagram illustrating a basic example of switch between different media sources.
Fig. 2 is a schematic diagram illustrating a basic example of addition/removal of a contributing source for a mixed media stream.
Fig. 3 is a schematic diagram illustrating distortions when the encoder states are reset while the decoder states are not reset.
Fig. 4 is a schematic diagram illustrating distortions when the decoder states are reset while the encoder states are not reset.
Fig. 5 is a schematic flow diagram of a basic method according to an exemplary embodiment of the invention.
Fig. 6 is a schematic block diagram primarily illustrating a receiver according to an exemplary embodiment of the invention.
Fig. 7 is a schematic flow diagram of a method according to another exemplary embodiment of the invention.
Fig. 8 is a schematic block diagram primarily illustrating a receiver according to a further exemplary embodiment of the invention.
Fig. 9 is a schematic flow diagram of a method according to yet another exemplary embodiment of the invention.

### DETAILED DESCRIPTION OF EMBODIMENTS

Throughout the drawings, the same reference characters will be used for corresponding or similar elements.

A careful analysis by the inventors has revealed that existing solutions suffer from one or more problems. In particular, it has been recognized that encoding the media with different instances of the encoder while using the same decoder will normally lead to a state mismatch in the decoder, resulting in significant distortions when the decoded media is rendered.

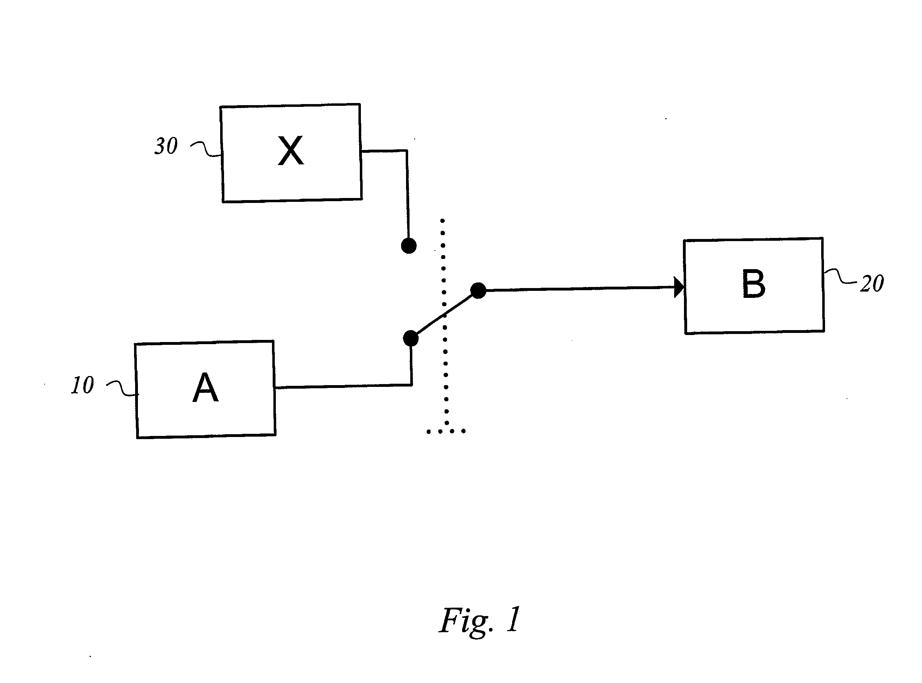

A main problem is that the media is encoded with different instances of the encoder while the decoder is the same. The reason for using the same decoder is because of complexity limitations and/or memory limitations and/or power consumption. In the example illustrated in Fig. 1 it is considered that one type of media is produced with a sender/encoder 10, denoted A, and this media is transmitted to a receiver/decoder 20, denoted B, in e.g. a VoIP session. During the session the media from sender/encoder 10, A, is replaced by the media encoded by a sender/encoder 30, denoted X. In short, media produced at A is sent to B, and then replaced at least temporarily by media from X.

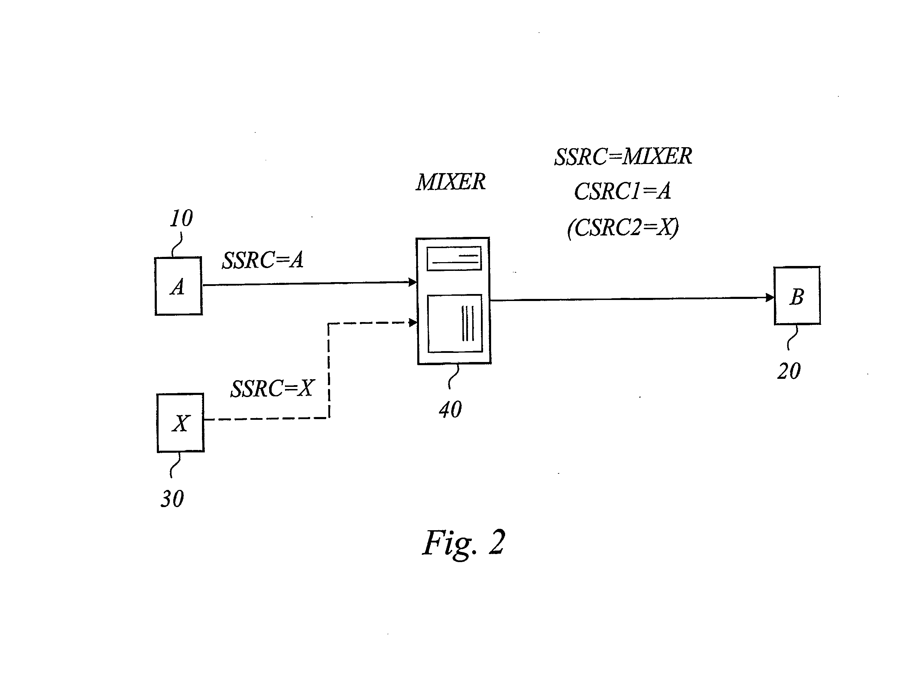

As illustrated in Fig. 2, there may be a similar problem in a communication session between a sender/encoder 10, denoted A, and a receiver/decoder 20, denoted B, when media from a sender/encoder 30, denoted X, is added as a new contributing source to a mixed media stream by an intermediate mixer 40. In the particular example of media communication based on the Real-time Transport Protocol (RTP) [3], there are two fields in the header of an RTP data packet that are of particular importance to media stream communication, namely the SSRC and CSRC fields. SSRC stands for Synchronization Source and identifies a unique RTP sender. CSRC stands for Contributing Source or Content Source and identifies the contributing source(s) of the mixed media payload. If there are multiple contributing sources, the payload is the mixed data from these sources. With reference to Fig. 2, it can be seen that each of the media sources A and X may send an individual media stream to the mixer 40 with an SSRC that corresponds to the payload source. The mixed media stream from the mixer 40 has an SSRC that corresponds to the mixer, and the CSRC values identify the contributing sources A and X of the mixed media stream to B. In analogy, a contributing source may of course also be removed from a mixed media stream.

There is also the possibility that the mixer (or application server) drops one of the sources and just forwards the other one to the receiver. Another possibility is that both streams go all the way to the receiver and the receiver has to choose which one to present to the listener.

Although switching of encoder instances works in existing circuit switched systems today, this works well because the used codecs are typically PCM [4] or ADPCM [5]. These codecs are sample-by-sample codecs which either do not use any prediction (PCM) or very limited amount of prediction (ADPCM). This means that the decoder will recover very rapidly from a state mismatch and the likelihood that this will cause an audible or otherwise perceivable distortion is low.

If one would use a codec that relies more on prediction and states, for example AMR [6] or AMR-WB [7], then switching between two encoders will cause a state mismatch in the decoder. For example, when switching from speech media from an encoder A to the media from an encoder X, the decoder states are the same as in the encoder A at the switching instant while the states in the encoder X will start from the initialization states. A similar state mismatch will occur if a switch is made back to the media from encoder A.

A further problem with a multi-rate codec such as AMR is that the speech from encoder A may very well be encoded with a lower rate codec mode, for example AMR 5.9 kbps, while the media from encoder X may very well be encoded with a higher rate codec mode, for example AMR 12.2 kbps. In this case, there is not only a state mismatch, but also a codec mode mismatch. Another example involves switching between codecs, for example between AMR and EVRC or between AMR and AMR-WB, representing a codec mismatch.

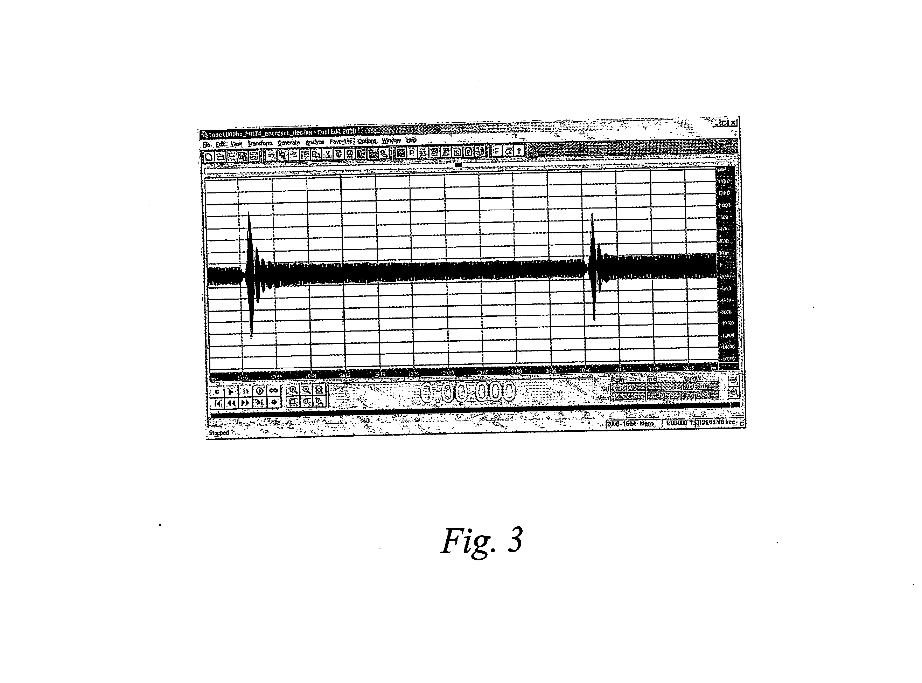

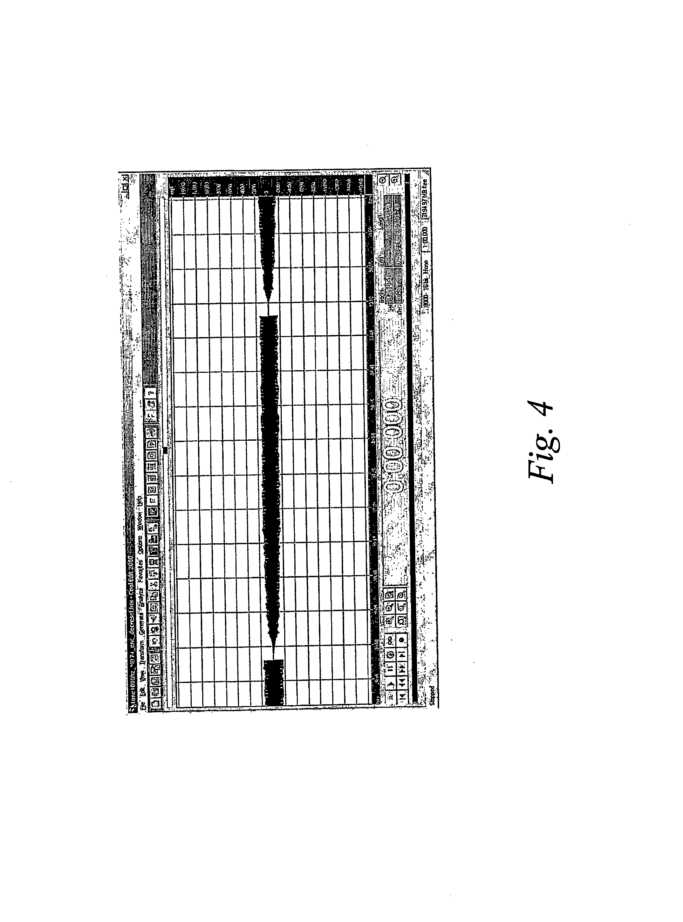

The states are very important for modern low-rate speech codecs since states are necessary in order to achieve good compression ratio while still providing good speech quality. A state mismatch can cause distortions that are more or less audible depending on the current content. In order to reduce the quality impact, it is therefore important to handle the media properly. In particular, the use of modem prediction-based codecs will normally lead to state mismatches, e.g. when an announcement interrupts the normal media, resulting in audible or otherwise perceivable distortions that may also be annoying to the user. Inter-frame prediction is used in many modem codecs, such as AMR or AMR-WB, in order to reduce the bit rate, i.e. to obtain a high compression ratio, while still providing good quality. The inter-frame prediction requires that states are passed from frame to frame. When an announcement interrupts the normal media, there will be a state mismatch since two different instances of the codec is used, one codec instance in UE A for the speech media from the user and one codec instance in the announcement server. The states in UE A have evolved according to the used prediction while the states in the announcement server start from the initialization states. A state mismatch can cause distortions that are more or less audible depending on the current content. Two examples of such distortions are shown in Fig. 3 and Fig. 4. The distortions are in both cases clearly audible and are easily noticeable by the listener but the spikes in Fig. 3 are much more annoying.

From Figs. 3 and 4 it can also be seen that it takes about 100-200 ms for the synthesis to recover after an asynchronous reset. A state-less codec such as PCM would instead recover immediately since there is no need to "build up" the states to the proper content.

This problem is not limited to speech. Similar problems occur also for general audio and for video. For these cases, one can in some cases expect even larger problems since these codecs typically has a larger compression ratio than speech codecs and to achieve this compression ratio they rely even more on good quality states.

As mentioned, a switch of encoder instances will occur when media from a given encoder is interrupted and replaced by an announcement encoded by a different encoder, a switch will occur when the announcement starts, another switch will occur when the announcement ends and/or the switch is made back to the original encoder instant. The announcement may be encoded "on the fly" or it may exist as prerecorded material, from a receiver viewpoint this does not make any difference though.

A state mismatch may also occur in call-on-hold situations. The state mismatch problem in call on hold scenarios can be illustrated as
1. User A has a conversation with user B and both UEs are in send-receive state.
2. User A puts user B on hold. UE A will enter send-only state and UE B will enter receive-only state.
3. User A sets up a conversation with user C and both UEs are in send-receive state. User B might get an announcement or music on hold from X meanwhile, or might be muted.
4. User A resumes conversation with user B. Both UE A and UE B are in send-receive state.

In addition to the problem in B when media from A is interrupted by an announcement or music on hold, the above scenario also gives a few potential problems in the transition from step 3 to step 4.
1. The UE of User A has received packets from the UE of User C, and will all of a sudden get packets from the UE of User B. If the two streams C→A and B→A are decoded with two different decoder instances, this is normally a small problem. If on the other hand the two streams share a single decoder instance this gives a potential risk for severe state mismatch unless the decoder is reset.
2. The UE of User B may have received DTX SID update packets from the UE of User A, call announcement or music on hold, or nothing. This means that the decoder might be in a complete mute state or in another unknown state. If the music on hold or announcement is handled by a separate decoder instance the problem is normally limited, if on the other hand only one decoder instance is used then again severe state mismatch problems will often occur.

The issue of only one decoder instance is especially important in cellular applications where the complexity and physical size issue is a key factor.

A basic idea according to an exemplary technology is to detect a potential state mismatch in the decoder during an on-going communication session, and reset the decoder to avoid the state mismatch, or at least reduce the distortion.

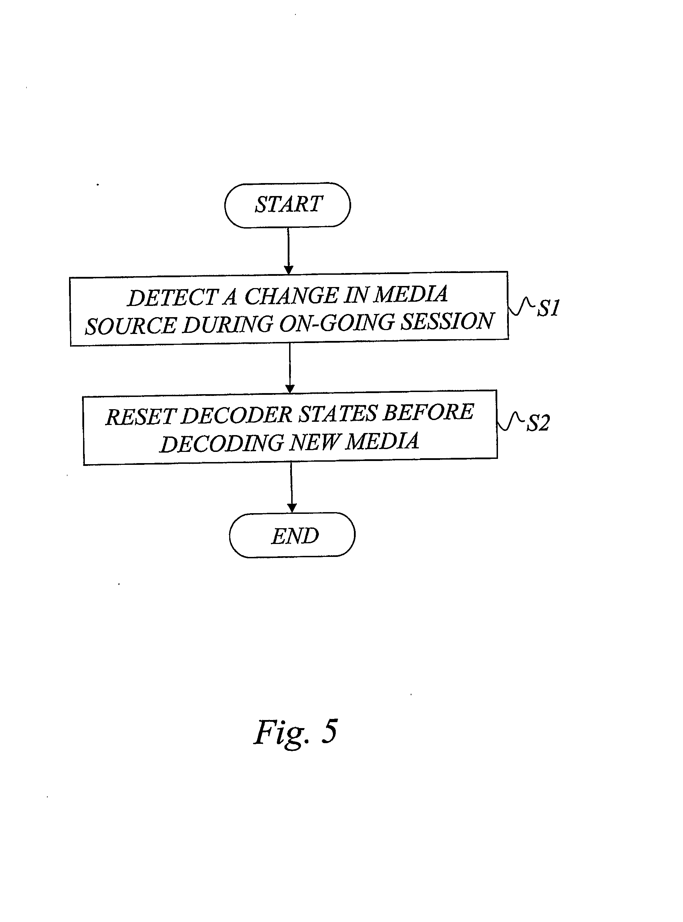

Fig. 5 is a schematic flow diagram of a basic method according to an exemplary embodiment of the invention. The method is based on detecting a change in source of incoming media during an on-going communication session (S1). In response to such a detected change, decoder states of the decoder are reset before decoding new incoming media (S2). In this way, the state mismatch can be avoided, or the distortion may at least be reduced, without the need for several active decoder instances in the receiver. This leads to reduced media distortions when the decoded media is finally rendered, and also results in substantial savings with respect to overall complexity, memory usage and power consumption. In general, resetting the decoder means that the considered decoder states are set to some well-defined initialization states.

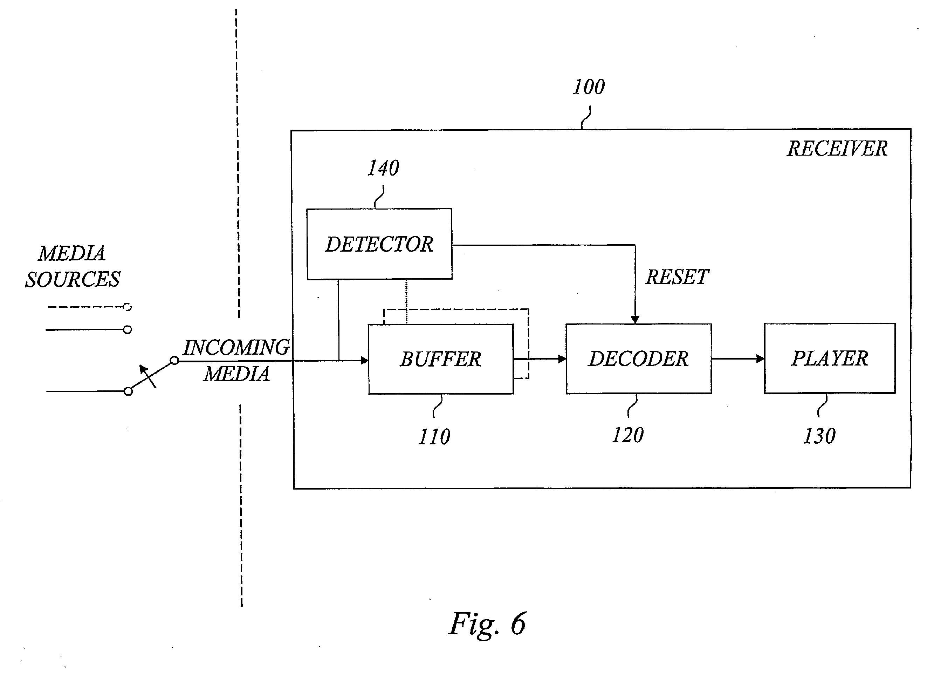

Fig. 6 is a schematic block diagram primarily illustrating a receiver according to an exemplary embodiment of the invention. Basically, the incoming media may originate from several media sources, and a change in source may for example be a switch of media source, or the addition or removal of a media source from an existing media stream. The receiver 100 includes one or several buffers 110, a decoder 120, and a player 130, as well as a detector 140. The buffer(s) 110 such as a jitter buffer temporarily stores incoming data packets before they are sent to the decoder 120 for further processing. Variations in packet arrival time, so-called jitter, may occur because of network congestion, timing drift or route changes. A jitter buffer may then be used to equalize the delay variations by intentionally delaying arriving packets and forwarding the packets to the decoder in regular intervals. In this way, the end user experiences a clear connection with very little distortion. The detector 140 preferably monitors the incoming media stream, or the buffered media data, to detect a change in source of incoming media. Existing media frames in the buffer 110 are preferably successively output from the buffer, decoded and rendered, and the new media frames are buffered. The detector 140 then generates a reset signal for the decoder 120. In response to the reset signal, the decoder 120 is reset to its initialization states before starting decoding and rendering the new media frames.

It is advantageous to monitor one or more packet header fields and detect a change in a packet field between packets in the incoming media data stream, to monitor the media payload using signal classification algorithms or water-marking techniques to detect a change in source, or to monitor explicit control signaling such as SIP signaling.

Examples of suitable detection mechanism include detecting a change in packet header fields such as the SSRC and/or CSRC fields in RTP streams, detecting a change in call-on-hold state, and detecting a change in media encoding between packets in the incoming media data. Other examples will be described below.

It should also be understood that re-initialization of the jitter buffer associated with the decoder (so-called re-buffering) may be considered as a particular form of resetting of the decoder.

A particular application of the invention is VoIP (Voice over IP) in MMTel systems, but the invention can also be used for video and general audio codecs. In particular it is desirable to ensure that supplementary services such as call announcements, call on hold, Explicit Call Transfer (ECT) or other supplementary services where the media source is changed are reconstructed without any distortions or at least with as small distortions as possible in the receiver. For example, the receiver may detect that an announcement comes from a different source than the normal media (from UE A) and take appropriate actions to minimize (or at least reduce) the distortions. The receiver may also detect a transfer to/from call on hold, Explicit Call Transfer or other similar services, indicating a change in source of incoming media.

As described above, it is important to handle the media properly in order to minimize any annoying distortions. The handling of the actions to reduce the distortions is primarily done in the receiving end.

### Examples of detection of state reset triggers.

There are several ways to detect that a reset of the decoder is necessary for instance due to the start and end of an announcement or other change in source. Some detection methods are reliable and rely on some kind of signaling. Other detection methods are less reliable because they require detecting some kind of characteristics.

Examples of reliable methods include:
- The RTP header contains an SSRC (synchronization source) field which includes a random number from the source. If the SSRC field is changed then the receiver knows that the source is different.
- When the announcement media has ended, the SSRC value will switch back to the original SSRC value.
- It is possible to have media from multiple sources in one RTP packet. In this case, there will be one SSRC field and one or several CSRC (contributing source) fields. The encoder **X,** which encodes the announcement media, may choose to add its media to the RTP packet from encoder **A,** which means that it will add a CSRC value. When SSRC and/or CSRC changes, the receiver knows that the added media comes from a different source.

- When the announcement media has ended, the CSRC value will be removed from the subsequent RTP packets.
- The media from encoder **A** and the announcement server may also be encoded differently. For example: The media from encoder **A** may use AMR-WB (wideband AMR) and the media from the encoder **X** may use AMR (narrowband AMR).

Different encoding is indicated by allocating different RTP Payload Types (PT) for the different configurations. This is also one reliable method to detect that the media comes from a different source.

When the media from encoder **X** has ended, the original codec format will be used for media from encoder **A**.
- SIP signaling. In call on hold scenarios some of the parties will enter a send-only or receive-only state to later go back to a send-receive state. These transitions will then serve as an indication of a change in source.
- The media originating from the announcement server may be detected using signal classification algorithms.
- Some sort of announcement identifier can be included in the actual media using so-called media water-marking.
- An announcement server may also send an explicit signal to inform the receiver that it has started and when it has ended sending announcement media. One possibility is to use the Talk Burst Control (TBC) signaling [8] defined for PoC (Push-to-talk over Cellular) [9].

Examples of alternative methods include:
- The jitter characteristics will normally change when switching from media from encoder A to media from the encoder X since the encoder X resides in an announcement server. This is because the total jitter, perceived by the receiver, is the sum of the jitter over the uplink, the core network and the downlink. And when the media is sent from the announcement server the jitter from the uplink is not applicable since the media is not sent over this air interface.
- For similar reasons, one can also expect that the packet loss characteristics change.

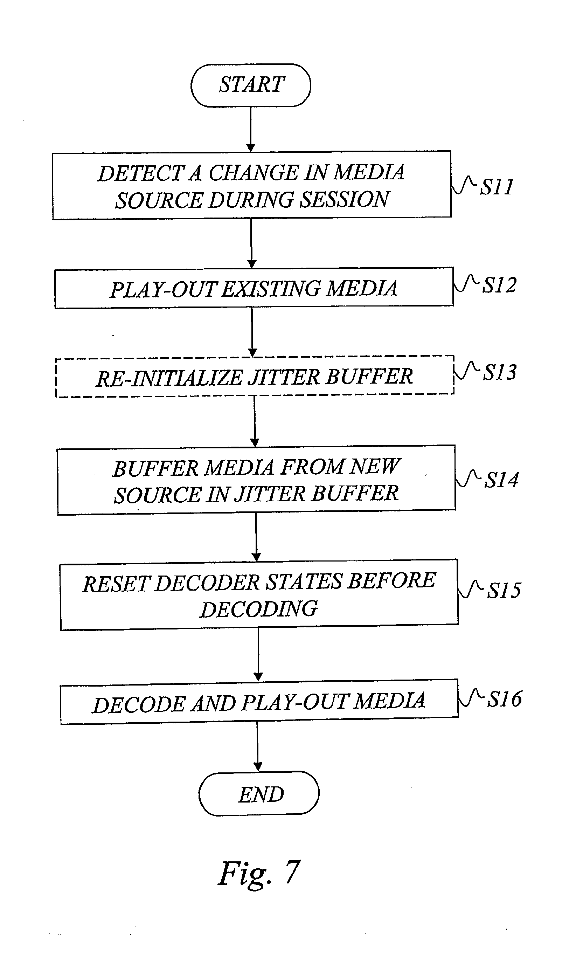

Fig. 7 is a schematic flow diagram of a method according to another exemplary embodiment of the invention. In this particular example, a change in media source during an on-going session is first detected (S11), and then existing media in the jitter buffer is decoded and played-out (S12). Optionally, the jitter buffer is re-initialized (S13). Media data from the new source is stored in the jitter buffer (S14). In response to the detection of a change in source, the decoder states are reset (S15) before decoding new media. Finally, the new media is decoded and played-out (S16).

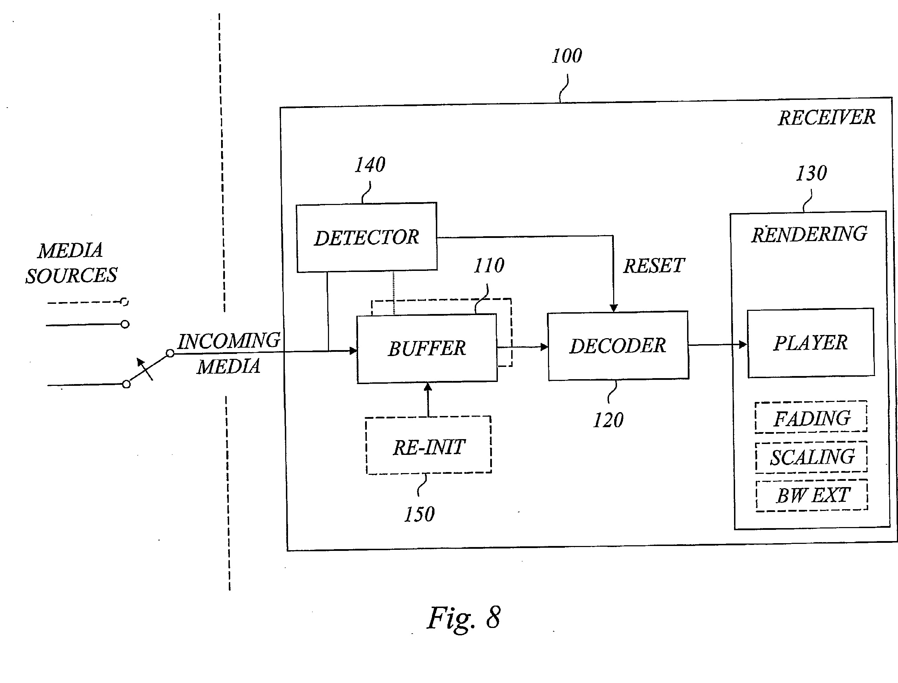

Fig. 8 is a schematic block diagram primarily illustrating a receiver according to a further exemplary embodiment of the invention, similar to that of Fig. 6. In this particular example, however, the receiver 100 further comprises a unit 150 for re-initializing the jitter buffer(s). In addition, the player 130 is implemented as a more flexible and general rendering module, including optional functions such as fading, time-scaling and bandwidth extension and so forth for providing a smooth transition between media from different sources.

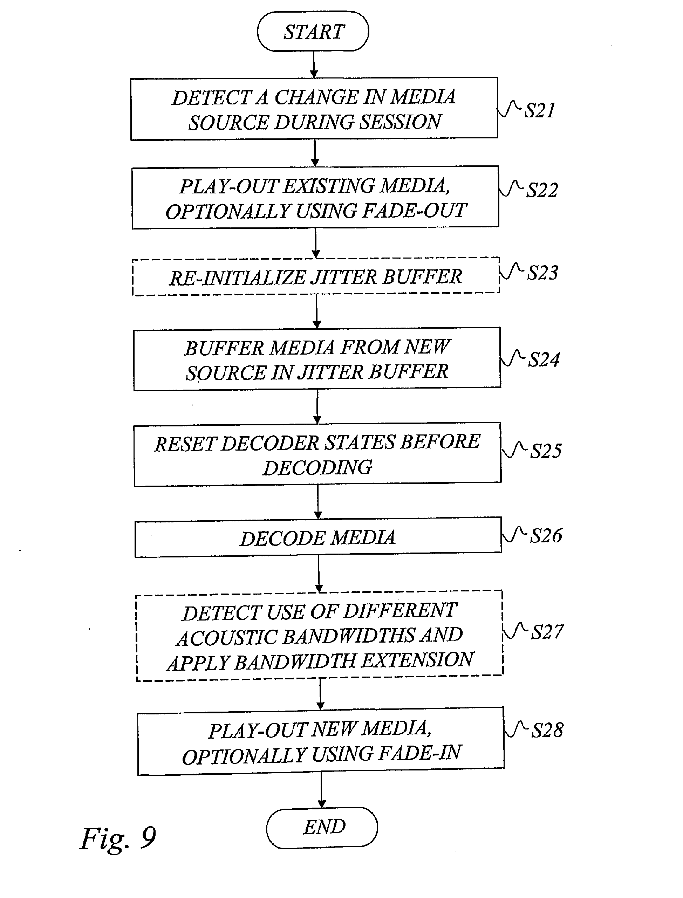

In the following, exemplary embodiments of the invention relating to actions when announcements or call on hold are detected will be described with exemplary reference to Fig. 9.

Upon detecting (S21) that the announcement media is received, or call on hold state is changed, examples of actions of the receiving entity (UE) include:
- Play-out or finalize (S22) the existing media frames from encoder **A** in the jitter buffer as soon as possible and buffer the announcement media (S24).
- The receiver may use time scaling in order to speed up the play-out of the media from encoder **A.**
- Before starting generating the announcement media, the decoder should be reset to the initialization states (S25). Once the decoder is reset, decoding of the new media can be initiated (S26).
- Re-initialize (S23) the jitter buffer (so called re-buffering).
- If the media encoded by encoder **X** is announcement media, it is not really real-time (real-time requirements don't apply to pre-recorded media) The receiver may buffer up more media in the jitter buffer before starting the play-out, • thereby reducing the risk of late losses.
- The play-out of the media from encoder **A** should preferably use fade-out (reduce the volume gradually from the used (normal) volume to zero). The receiver should preferably use fade-in (increase the volume gradually from zero to the normal volume) for the announcement media (S28).
- The receiver can also monitor the regenerated signal before it is played out in order to detect any spikes so that they can be muted.
- Upon detecting that the speech media from encoder **A** and the announcement media use different acoustic bandwidths, for example encoded by AMR-WB (50-7000 Hz) and AMR (300-3400 Hz) respectively, the receiver should preferably use bandwidth extension (wideband extension) in order to produce a smooth transition (S27). Other similar procedures for providing a smooth transition between different media can also be envisaged for audio and video.

When there is no more announcement media being received, examples of actions of the receiving entity (UE) include:
- Play-out any announcement media still existing in the jitter buffer as soon as possible (S22).
- The receiver may use time scaling to speed up the play-out of the remaining announcement media.
- Reset the decoder before playing out media from encoder A (S25).
- Re-initialize the jitter buffer (re-buffering) (S23). This is especially important since there will normally be less jitter on the RTP packets from encoder X if it resides in a box in the network such as an announcement server than from encoder A, which means that the jitter buffer normally has adapted to a lower buffering level than it used for the RTP packets from encoder A. And then when switching back to the media from encoder A, the jitter buffer does not contain enough data to cope with the larger jitter that can be expected for the media from encoder A.
- A possible modification is to store the jitter buffer target level and adaptation states before switching to the announcement media and re-initialize the jitter buffer adaptation with the level and the states.

As previously described, the sending side may enforce a decoder reset on the receiving side in preparation of media from a new source by sending a predefined signal pattern. This means that during an on-going communication session involving reception of media from a first media source the receiver will receive a predefined signal pattern in preparation of subsequent reception of media from a second different media source. The decoder will then be reset in response to the predefined signal pattern before initiating decoding of media from the second media source. For example, upon switching back from a call on hold state the sending entity (UE) may transmit a codec homing frame or similar signal pattern (even a number of empty frames) and thereby enforce a decoder reset in the receiver.

Exemplary advantages of the invention:
- Distortions due to switching between media sources, addition and/or deletion of media sources are reduced and may even be completely removed. This gives a more pleasant transition between the media, e.g. when an announcement has to be generated for the receiving user.
- There is also a complexity advantage, both MIPS and memory, in the UE since the UE does not have to have several active codec instances executing in parallel.

The embodiments described above are merely given as examples, and it should be understood that the present invention is not limited thereto. Further modifications, changes and improvements which retain the basic underlying principles disclosed and claimed herein are within the scope of the invention.

### ABBREVIATIONS

- ADPCM: Adaptive Differential PCM
- AMR: Adaptive Multi-Rate
- AMR-WB: AMR-WideBand
- CSRC: Contributing Source
- DTX: Discontinuous Transmission
- ECT: Explicit Call Transfer
- EVRC: Enhanced Variable Rate Codec
- IMS: IP Multimedia Subsystem
- IP: Internet Protocol
- MIPS: Million Instructions Per Second
- MMTel: Multi Media Telephony
- PCM: Pulse Code Modulation
- PoC: Push-to-talk over Cellular
- RTP: Real-Time Protocol
- SID: Silence Descriptor
- SIP: Session Initiation Protocol
- SSRC: Synchronization Source
- TBC: Talk-Burst Control
- UE: User Equipment
- VoIP: Voice over IP

### REFERENCES

[1] 3GPP TS 23.228, "IP Multimedia Subsystem (IMS), Stage 2".
[2] 3GPP TS 26.114. "IP Multimedia Subsystem (IMS); Multimedia Telephony; Media handling and interaction".
[3] RFC 3550, "RTP: A Transport Protocol for Real-Time Applications", H. Schulzrinne, S. Casner, R. Frederick and V. Jacobson.
[4] ITU-T Recommendation G.711, "Pulse Code Modulation (PCM) of Voice Frequencies".
[5] ITU-T Recommendation G.726, "40, 32, 24, 16 kbit/s Adaptive Differential Pulse Code Modulation (ADPCM)".
[6] 3GPP TS 26.071, "Mandatory Speech Codec speech processing functions; AMR Speech CODEC; General description".
[7] 3GPP TS 26.171, "Speech codec speech processing functions; Adaptive Multi-Rate - Wideband (AMR-WB) speech codec; General description".
[8] Open Mobile Alliance, "PoC User Plane", Candidate Version 1.0 - 27 Jan 2006, Chapter 6.5.
[9] Open Mobile Alliance, "OMA PoC System Description", Draft Version 2.0 - 21 June 2006.

## Claims

1. A method for reducing media distortions in a receiver (20; 100) having a decoder (120) for decoding incoming media and a player (130) for playing decoded media, said method comprising the steps of:
- detecting (S1), during an on-going communication session between a first sender (10) and said receiver (20; 100), a change in source of incoming media, wherein said step of detecting a change in source of incoming media includes the step of detecting that media from a second different sender (30), as a new media source, is inserted in the communication session; and
- resetting (S2) decoder states of said decoder in response to said detected change before decoding new incoming media.

2. The method of claim 1, wherein said step of detecting a change in source of incoming media includes the step of detecting a switch from media from said first sender (10) to media from said second different sender (30) or detecting media from said second different sender (30) as a new contributing source for a mixed media stream.

3. The method of claim 1, wherein said step (S1) of detecting a change in source of incoming media includes the step of detecting a switch from a first media source to a second different media source, wherein said new incoming media includes media from said second media source.

4. The method of claim 3, wherein said switch from said first media source to said second media source involves a switch between user media from a remote user (10) and announcement media from an announcement server (30).

5. The method of claim 1, wherein said step of detecting a change in source of incoming media includes the step of detecting a change in contributing source for a mixed media stream.

6. The method of claim 1, wherein said step (S1) of detecting a change in source of incoming media includes the step of detecting a change in a packet header field between packets in the incoming media data.

7. The method of claim 6, wherein said packet header field is the Synchronization Source, SSRC, field and/or the Contributing Source, CSRC, field in a Real-time Transport Protocol, RTP, stream.

8. The method of claim 1, further comprising the steps of:
- playing out (S12; S22) existing media from a first source stored in a jitter buffer provided in connection with the decoder in the receiver;
- re-initializing (S13; S23) said jitter buffer;
- buffering media (S14; S24) from a second source in said jitter buffer, said buffered media ready for decoding once the decoder states have been reset; and
- applying (S16; S27, S28) a transition procedure to produce a smooth transition between media from said first source and media from said second source,
wherein the existing media from said first source is played-out by using fade-out, and the media from said second source is played-out by using fade-in.

9. A system for reducing media distortions in a receiver (20; 100) having a decoder (120) for decoding incoming media and a player (130) for playing decoded media, said system comprising:
- means (140) for detecting, during an on-going communication session between a first sender (10) and said receiver (20; 100), a change in source of incoming media, wherein said means (140) for detecting a change in source of incoming media includes means for detecting that media from a second different sender (30), as a new media source, is inserted in the communication session; and
- means (140, RESET) for resetting decoder states of said decoder (120) in response to said detected change before decoding new incoming media.

10. The system of claim 9, wherein said means (140) for detecting a change in source of incoming media includes means for detecting a switch from media from said first sender (10) to media from said second different sender (30) or for detecting media from said second different sender (30) as a new contributing source for a mixed media stream.

11. The system of claim 9, wherein said means (140) for detecting a change in source of incoming media includes means for detecting a switch from a first media source to a second different media source, wherein said new incoming media includes media from said second media source.

12. The system of claim 11, wherein said switch from said first media source to said second media source involves a switch between user media from a remote user (10) and announcement media from an announcement server (30).

13. The system of claim 9, wherein said means (140) for detecting a change in source of incoming media includes means for detecting a change in contributing source for a mixed media stream.

14. The system of claim 9, wherein said means (140) for detecting a change in source of incoming media includes means for detecting a change in a packet header field between packets in the incoming media data.

15. The system of claim 14, wherein said packet header field is the Synchronization Source, SSRC, field and/or the Contributing Source, CSRC, field in a Real-time Transport Protocol, RTP, stream.

16. The system of claim 9, wherein said means (140) for detecting a change in source of incoming media includes means for detecting a change in media encoding between packets in the incoming media data.

17. The system of claim 9, wherein said system further comprises:
- a jitter buffer (110) provided in connection with said decoder for storing incoming media, said player being operable for playing out existing media from a first source already stored in said jitter buffer,
- means for re-initializing said jitter buffer (110);
- means for buffering media from a second source in said jitter buffer (110), said buffered media ready for decoding once the decoder states have been reset,
wherein said player (130) is operable for playing out the existing media by using fade-out, and said player (130) is operable for playing out the media from said second source by using fade-in.

18. A receiver (20; 100) comprising a system for reducing media distortions according to any of the claims 9 to 17.

## Patentansprüche

1. Verfahren zur Verringerung von Medienverzerrungen in einem Empfänger (20; 100) mit einem Decoder (120) zum Decodieren von eingehenden Medien und einer Wiedergabeeinrichtung (130) zum Wiedergeben von decodierten Medien, wobei das Verfahren die folgenden Schritte umfasst:
- Erkennen (S1) während einer bestehenden Kommunikationssitzung zwischen einem ersten Sender (10) und dem Empfänger (20; 100) einer Änderung der Quelle von eingehenden Medien, wobei der Schritt des Erkennens einer Änderung der Quelle von eingehenden Medien den Schritt des Erkennens umfasst, dass Medien von einem zweiten, anderen Sender (30) als einer neuen Medienquelle in die Kommunikationssitzung eingefügt werden; und
- Rücksetzen (S2) von Decoderzuständen des Decoders entsprechend der erkannten Änderung vor dem Decodieren von neuen eingehenden Medien.

2. Verfahren nach Anspruch 1, wobei der Schritt des Erkennens einer Änderung der Quelle von eingehenden Medien den Schritt des Erkennens eines Wechsels von Medien vom ersten Sender (10) zu Medien vom zweiten, anderen Sender (30) oder Erkennen von Medien vom zweiten, anderen Sender (30) als einer neuen Beitragsquelle für einen gemischten Medienstrom umfasst.

3. Verfahren nach Anspruch 1, wobei der Schritt (S1) des Erkennens einer Änderung der Quelle von eingehenden Medien den Schritt des Erkennens eines Wechsels von einer ersten Medienquelle zu einer zweiten, anderen Medienquelle umfasst, wobei die neuen eingehenden Medien Medien von der zweiten Medienquelle umfassen.

4. Verfahren nach Anspruch 3, wobei der Wechsel von der ersten Medienquelle zur zweiten Medienquelle einen Wechsel zwischen Benutzermedien von einem abgesetzten Benutzer (10) und Ankündigungsmedien von einem Ankündigungsserver (30) umfasst.

5. Verfahren nach Anspruch 1, wobei der Schritt des Erkennens einer Änderung der Quelle von eingehenden Medien den Schritt des Erkennens einer Änderung der Beitragsquelle für einen gemischten Medienstrom umfasst.

6. Verfahren nach Anspruch 1, wobei der Schritt (S1) des Erkennens einer Änderung der Quelle von eingehenden Medien den Schritt des Erkennens einer Änderung in einem Paketkopffeld zwischen Paketen in den eingehenden Mediendaten umfasst.

7. Verfahren nach Anspruch 6, wobei das Paketkopffeld das Synchronisationsquellen, SSRC,-Feld und/oder das Beitragsquellen, CSRC,-Feld eines Echtzeit-Transportprotokoll, RTP, -Stroms ist.

8. Verfahren nach Anspruch 1, ferner umfassend die folgenden Schritte:
- Wiedergeben (S12; S22) von bestehenden Medien aus einer ersten Quelle, die in einem Jitterpuffer gespeichert ist, der in Verbindung mit dem Decoder im Empfänger vorgesehen ist;
- Reinitialisieren (S13; S23) des Jitterpuffers;
- Puffern von Medien (S14; S24) aus einer zweiten Quelle im Jitterpuffer, wobei die gepufferten Medien zum Decodieren bereit sind, sobald die Decoderzustände zurückgesetzt wurden; und
- Anwenden (S16; S27, S28) einer Übergangsprozedur, um einen weichen Übergang zwischen Medien von der ersten Quelle und Medien von der zweiten Quelle zu erzeugen,
wobei die bestehenden Medien von der ersten Quelle durch Verwenden von Ausblendung wiedergegeben werden, und die Medien von der zweiten Quelle durch Verwenden von Einblendung wiedergegeben werden.

9. System zum Verringern von Medienverzerrungen in einem Empfänger (20; 100) mit einem Decoder (120) zum Decodieren von eingehenden Medien und einer Wiedergabeeinrichtung (130) zum Wiedergeben von decodierten Medien, wobei das System umfasst:
- Mittel (140) zum Erkennen während einer bestehenden Kommunikationssitzung zwischen einem ersten Sender (10) und dem Empfänger (20; 100) einer Änderung der Quelle von eingehenden Medien, wobei das Mittel (140) zum Erkennen einer Änderung der Quelle von eingehenden Medien Mittel zum Erkennen umfasst, dass Medien von einem zweiten, anderen Sender (30) als einer neuen Medienquelle in die Kommunikationssitzung eingefügt werden; und
- Mittel (140, RESET) zum Rücksetzen von Decoderzuständen des Decoders (120) entsprechend der erkannten Änderung vor dem Decodieren von neuen eingehenden Medien.

10. System nach Anspruch 9, wobei das Mittel (140) zum Erkennen einer Änderung der Quelle von eingehenden Medien Mittel zum Erkennen eines Wechsels von Medien vom ersten Sender (10) zu Medien vom zweiten, anderen Sender (30) oder zum Erkennen von Medien vom zweiten, anderen Sender (30) als einer neuen Beitragsquelle für einen gemischten Medienstrom umfasst.

11. System nach Anspruch 9, wobei das Mittel (140) zum Erkennen einer Änderung der Quelle von eingehenden Medien Mittel zum Erkennen eines Wechsels von einer ersten Medienquelle zu einer zweiten, anderen Medienquelle umfasst, wobei die neuen eingehenden Medien Medien von der zweiten Medienquelle umfassen.

12. System nach Anspruch 11, wobei der Wechsel von der ersten Medienquelle zur zweiten Medienquelle einen Wechsel zwischen Benutzermedien von einem abgesetzten Benutzer (10) und Ankündigungsmedien von einem Ankündigungsserver (30) umfasst.

13. System nach Anspruch 9, wobei das Mittel (140) zum Erkennen einer Änderung der Quelle von eingehenden Medien Mittel zum Erkennen einer Änderung der Beitragsquelle für einen gemischten Medienstrom umfasst.

14. System nach Anspruch 9, wobei das Mittel (140) zum Erkennen einer Änderung der Quelle von eingehenden Medien Mittel zum Erkennen einer Änderung in einem Paketkopffeld zwischen Paketen in den eingehenden Mediendaten umfasst.

15. System nach Anspruch 14, wobei das Paketkopffeld das Synchronisationsquellen, SSRC,-Feld und/oder das Beitragsquellen, CSRC,-Feld eines Echtzeit-Transportprotokoll, RTP,-Stroms ist.

16. System nach Anspruch 9, wobei das Mittel (140) zum Erkennen einer Änderung der Quelle von eingehenden Medien Mittel zum Erkennen einer Änderung der Mediencodierung zwischen Paketen in den eingehenden Mediendaten umfasst.

17. System nach Anspruch 9, wobei das System ferner umfasst:
- einen Jitterpuffer (110), der in Verbindung mit dem Decoder zum Speichern von eingehenden Medien vorgesehen ist, wobei die Wiedergabeeinrichtung zum Wiedergeben von bestehenden Medien aus einer ersten Quelle, die bereits im Jitterpuffer gespeichert ist, betrieben werden kann,
- Mittel zum Reinitialisieren des Jitterpuffers (110) ;
- Mittel zum Puffern von Medien aus einer zweiten Quelle im Jitterpuffer (110), wobei die gepufferten Medien zum Decodieren bereit sind, sobald die Decoderzustände zurückgesetzt wurden,
wobei die Wiedergabeeinrichtung (130) zum Wiedergeben der bestehenden Medien durch Verwenden von Ausblendung betrieben werden kann, und die Wiedergabeeinrichtung (130) zum Wiedergeben der Medien von der zweiten Quelle durch Verwenden von Einblendung betrieben werden kann.

18. Empfänger (20; 100), umfassend ein System zum Verringern von Medienverzerrungen nach einem der Ansprüche 9 bis 17.

## Revendications

1. Procédé de réduction des distorsions média dans un récepteur (20 ; 100) ayant un décodeur (120) pour décoder des média entrants et un lecteur (130) pour lire des média décodés, ledit procédé comprenant les étapes consistant à :
- détecter (S1), pendant une session de communication en cours entre un premier émetteur (10) et ledit récepteur (20 ; 100), un changement de source des média entrants, dans lequel ladite étape de détection d'un changement de source des média entrants inclut l'étape de détection que les média provenant d'un second émetteur (30) différent, en tant que nouvelle source de média, sont insérées dans la session de communication ; et
- réinitialiser (S2) des états de décodeur dudit décodeur en réponse audit changement détecté avant le décodage de nouveaux média entrants.

2. Procédé selon la revendication 1, dans lequel ladite étape de détection d'un changement de source des média entrants inclut l'étape de détection d'une commutation des média dudit premier émetteur (10) aux média dudit second émetteur (30) différent ou la détection des média dudit second émetteur différent (30) comme une nouvelle source contributrice pour un flux de média mixte.

3. Procédé selon la revendication 1, dans lequel ladite étape (S1) de détection d'un changement de source des média entrants inclut l'étape de détection d'une commutation d'une première source de média à une seconde source de média différente, dans lequel lesdits nouveaux média entrants incluent des média provenant de ladite seconde source de média.

4. Procédé selon la revendication 3, dans lequel ladite commutation de ladite première source de média à ladite seconde source de média implique une commutation entre des média d'utilisateur provenant d'un utilisateur distant (10) et des média d'annonce provenant d'un serveur d'annonce (30).

5. Procédé selon la revendication 1, dans lequel ladite étape de détection d'un changement de source des média entrants inclut l'étape de détection d'un changement de source contributrice pour un flux de média mixte.

6. Procédé selon la revendication 1, dans lequel ladite étape (S1) de détection d'un changement de source des média entrants inclut l'étape de détection d'un changement dans un champ d'en-tête de paquet entre des paquets dans les données de média entrants.

7. Procédé selon la revendication 6, dans lequel ledit champ d'en-tête de paquet est le champ de source de synchronisation, SSRC, et/ou le champ de source contributrice, CSRC, dans un flux de protocole de transport en temps réel, RTP.

8. Procédé selon la revendication 1, comprenant en outre les étapes consistant à :
- lire (S12 ; S22) les média existants d'une première source mémorisés dans une mémoire tampon de jigue fournie en liaison avec le décodeur dans le récepteur ;
- réinitialiser (S13 ; S23) ladite mémoire tampon de jigue ;
- mettre en mémoire tampon des média (S14 ; S24) provenant d'une seconde source dans ladite mémoire tampon de jigue, lesdits média mis en mémoire tampon étant prêts pour un décodage une fois que les états de décodeur ont été réinitialisés ; et
- appliquer (S16 ; S27, S28) une procédure de transition pour produire une transition lisse entre les média de ladite première source et les média de ladite seconde source,
dans lequel les média existants provenant de ladite première source sont lus en utilisant une baisse graduelle et les média de ladite seconde source sont lus en utilisant une montée graduelle.

9. Système de réduction des distorsions média dans un récepteur (20 ; 100) ayant un décodeur (120) pour décoder les média entrants et un lecteur (130) pour lire les média décodés, ledit système comprenant :
- un moyen (140) pour détecter, pendant une session de communication en cours entre un premier émetteur (10) et ledit récepteur (20 ; 100), un changement de source de média entrants, dans lequel ledit moyen (140) de détection d'un changement de source des média entrants inclut un moyen de détection que les média provenant d'un second émetteur (30) différent, en tant que nouvelle source de média, sont insérées dans la session de communication ; et
- un moyen (140, RESET) pour réinitialiser les états de décodeur dudit décodeur (120) en réponse audit changement détecté avant le décodage des nouveaux média entrants.

10. Système selon la revendication 9, dans lequel ledit moyen (140) de détection d'un changement de source de média entrants inclut un moyen de détection d'une commutation des média dudit premier émetteur (10) aux média dudit second émetteur différent (30) ou de détection des média dudit second émetteur différent (30) comme une nouvelle source contributrice pour un flux de média mixte.

11. Système selon la revendication 9, dans lequel ledit moyen (140) de détection d'un changement de source de média entrants inclut un moyen de détection d'une commutation d'une première source de média à une seconde source de média différente, dans lequel lesdits nouveaux média entrants incluent des média provenant de ladite seconde source de média.

12. Système selon la revendication 11, dans lequel ladite commutation de ladite première source de média à ladite seconde source de média implique une commutation entre des média d'utilisateur provenant d'un utilisateur distant (10) et des média d'annonce provenant d'un serveur d'annonce (30).

13. Système selon la revendication 9, dans lequel ledit moyen (140) de détection d'un changement de source des média entrants inclut un moyen de détection d'un changement de source contributrice pour un flux de média mixte.

14. Système selon la revendication 9, dans lequel ledit moyen (140) de détection d'un changement de source de média entrants inclut un moyen de détection d'un changement dans un champ d'en-tête de paquet entre les paquets dans les données de média entrantes.

15. Système selon la revendication 14, dans lequel ledit champ d'en-tête de paquet est le champ de source de synchronisation, SSRC, et/ou le champ de source contributrice, CSRC, dans un flux de protocole de transport en temps rée, RTP.

16. Système selon la revendication 9, dans lequel ledit moyen (140) de détection d'un changement de source des média entrants inclut un moyen de détection d'un changement de codage de média entre les paquets dans les données de média entrantes.

17. Système selon la revendication 9, dans lequel ledit système comprend en outre :
- une mémoire tampon de jigue (110) prévue en liaison avec ledit décodeur pour mémoriser des média entrants, ledit lecteur étant opérationnel pour lire des média existants provenant d'une première source déjà mémorisée dans ladite mémoire tampon de jigue,
- un moyen de réinitialisation de ladite mémoire tampon de jigue (110) ;
- un moyen de mise en mémoire tampon de média provenant d'une seconde source dans ladite mémoire tampon de jigue (110), lesdits média mis en mémoire tampon étant prêts pour un décodage une fois que les états de décodeur ont été réinitialisés,
dans lequel ledit lecteur (130) est opérationnel pour lire les média existants en utilisant une baisse graduelle, et ledit lecteur (130) est opérationnel pour lire les média provenant de ladite seconde source en utilisant une montée graduelle.

18. Récepteur (20 ; 100) comprenant un système de réduction des distorsions média selon une quelconque des revendications 9 à 17.
